(19) Europäisches Patentamt
European Patent Office
Office européen des brevets

(11) **EP 1 488 697 B1**

(12) **EUROPEAN PATENT SPECIFICATION**

(45) Date of publication and mention
of the grant of the patent:
**29.06.2016 Bulletin 2016/26**

(51) Int Cl.:
**A01N 25/14** [(2006.01)]

(21) Application number: **03715521.5**

(22) Date of filing: **27.03.2003**

(86) International application number:
**PCT/JP2003/003844**

(87) International publication number:
**WO 2003/079783 (02.10.2003 Gazette 2003/40)**

(54) **GRANULATED WETTABLE POWDER**

GRANULIERTES SPRITZPULVER

POUDRE MOUILLABLE GRANULEE

(84) Designated Contracting States:
**FR NL**

(30) Priority: **27.03.2002 JP 2002087474**

(43) Date of publication of application:
**22.12.2004 Bulletin 2004/52**

(73) Proprietor: **KUMIAI CHEMICAL INDUSTRY CO., LTD.**
**Taito-ku**
**Tokyo 110-8782 (JP)**

(72) Inventors:
- **KURITA, Kazunori**
  **Kumiai Chemical Industry Co.,Ltd.**
  **Taitoh-ku, Tokyo 110-0008 (JP)**
- **MISUMI, Yuji**
  **c/o Kumiai Chemical Industry Co., Ltd**
  **Taitoh-ku, Tokyo 110-0008 (JP)**
- **OZAKI, Eisuke**
  **c/o Kumiai Chemical Industry Co. Ltd**
  **Taitoh-ku, Tokyo 110-0008 (JP)**
- **IKEUCHI, Toshihiro**
  **Kumiai Chemical Industry Co.Ltd**
  **Taitoh-ku, Tokyo 110-0008 (JP)**

(74) Representative: **Hartz, Nikolai**
**Wächtershäuser & Hartz**
**Patentanwaltspartnerschaft mbB**
**Weinstrasse 8**
**80333 München (DE)**

(56) References cited:
**WO-A1-02/102152     JP-A- 2001 294 501**

US-A- 5 510 321     US-A- 5 523 276

- **DATABASE WPI Week 199702 Thomson Scientific, London, GB; AN 1997-017258 XP002598374 & JP 8 283108 A (NISSAN CHEM IND LTD) 29 October 1996 (1996-10-29) -& DATABASE EPODOC [Online] EUROPEAN PATENT OFFICE, THE HAGUE, NL; 1996, XP002598375 -& JP 8 283108 A (NISSAN CHEM IND LTD) 29 October 1996 (1996-10-29)**
- **DATABASE WPI Week 199235 Thomson Scientific, London, GB; AN 1992-288863 XP002598376 & JP 4 198106 A (HOKKO CHEM IND CO LTD) 17 July 1992 (1992-07-17) -& DATABASE CA [Online] CHEMICAL ABSTRACTS SERVICE, COLUMBUS, OHIO, US; 15 November 1992 (1992-11-15), XP002598377 Database accession no. 117:186650 -& DATABASE EPODOC [Online] EUROPEAN PATENT OFFICE, THE HAGUE, NL; 1992, XP002598378 -& JP 4 198106 A (HOKKO CHEM IND CO LTD) 17 July 1992 (1992-07-17)**
- **DATABASE WPI Week 198751 Thomson Scientific, London, GB; AN 1987-359723 XP002598379 & JP 62 263101 A (NIHON NOYAKU CO LTD) 16 November 1987 (1987-11-16) -& DATABASE EPODOC [Online] EUROPEAN PATENT OFFICE, THE HAGUE, NL; 1987, XP002598380 & JP 62 263101 A (NIHON NOYAKU CO LTD) 16 November 1987 (1987-11-16)**

- DATABASE WPI Week 198121 Thomson Scientific, London, GB; AN 1981-37159D XP002598381 & JP 56 034606 A (SUMITOMO CHEM CO LTD) 6 April 1981 (1981-04-06) -& DATABASE EPODOC [Online] EUROPEAN PATENT OFFICE, THE HAGUE, NL; 1981, XP002598382 & JP 56 034606 A (SUMITOMO CHEM CO LTD) 6 April 1981 (1981-04-06)

**Description**

TECHNICAL FIELD

The present invention relates to a novel granulated wettable powder excellent in dispersibility and suspensibility in water, and excellent in productivity, and a process for its production.

BACKGROUND ART

In many cases, agricultural chemicals are processed into dusts, granules, wettable powders, emulsifiable concentrates, SC or EW and then applied. Among them, dusts and granules are applied as formulated or by means of application machines. Whereas, an emulsifiable concentrate, an wettable powder, SC or EW is diluted mainly with water or the like to a predetermined concentration and then applied.

In most cases, an emulsifiable concentrate is prepared by dissolving an agricultural chemical active ingredient in an organic solvent, then adding an emulsifier, etc, followed by processing. Accordingly, formulation is possible so long as the agricultural chemical active ingredient is soluble in an organic solvent. Further, the organic solvent to be used is flammable in many cases, and because of a possible danger of fire, etc., sufficient care is required for its handling, transportation or storage. Further, the organic solvent has a problem of its toxicity or phytotoxicity accompanying its use.

On the other hand, as is different from an emulsifiable concentrate, a wettable powder is one prepared by pulverizing an agricultural chemical active ingredient into fine particles or having it adsorbed on a highly oily absorptive fine powder, followed by pulverization, then incorporating a surfactant having a dispersibility and wet malleability thereto, followed by processing. Accordingly, even an agricultural chemical active ingredient which is not soluble in an organic solvent, may be processed. Not only that, there will be no danger of fire or the like in its handling, transportation or storage, since no organic solvent is required. Further, a problem of toxicity or phytotoxicity attributable to the use of an organic solvent, is eliminated.

However, conventional common wettable powders have the following drawbacks. Namely, they are composed of fine particles of ingredients including the agricultural chemical active ingredient and thus have problems such that they have small apparent specific gravities and thus are bulky, a fine powder tends to swirl up at the time of diluting it to prepare an application solution, such being undesirable for the health of the worker, and there is a difficulty in the operation of measuring and dividing the agricultural chemical.

A flowable such as SC or EW is a formulation having the drawbacks of an wettable powder such as dusting or difficulty in measurement, overcome by formulating it into a suspended or emulsified formulation, but it is a liquid formulation having a relatively high viscosity and thus has problems in discharging from a container or in the disposal of the used container because of the deposition of the formulation in the container.

Therefore, there has been an attempt to granulate the wettable powder in recent years.

A granulated wettable powder is one having an agricultural chemical active ingredient, a surfactant and, if necessary, other adjuvants, mixed and granulated. As such a granulation method, an extrusion granulation method, a spray drying granulation method, a fluidized bed granulation method, a tumbling granulation method or a compression granulation method may, for example, be mentioned. By granulating an wettable powder, the drawbacks of an wettable powder, such as the bulkiness, dusting and difficulty in measurement, and problems attributable to the viscosity of a flowable, will be solved.

A granulated wettable powder is usually diluted with from a few tens to a few thousands times of water to form a dispersion of fine particles, which will be applied to an agricultural field. It is necessary that after the granulated wettable powder is put in water, it will quickly be disintegrated in water, and the agricultural chemical active ingredient and the adjuvant components will maintain a uniform stabilized suspended state. However, for example, in a case where a conventional wettable powder formulation is granulated, the disintegration dispersibility in water is poor, whereby a uniform dispersion can hardly be obtained. Further, there has been a problem such that a stabilized suspended state can hardly be maintained with time.

As a method for solving such problems, there has been proposed, for example, a method wherein a specific surfactant or a combination of a plurality of surfactants, is incorporated (JP-A-59-193803, JP-A-62-36302, JP-A-5-43402, JP-A-7-126106, JP-A-8-34702), as a method wherein a water-soluble ingredient is incorporated, a method wherein starch and a water-soluble inorganic salt are incorporated (JP-A-51-1649), a method wherein a saccharide, a naphthalenesulfonate surfactant or an alkali metal phosphate, is incorporated (JP-A-57-163303), a method wherein one or more members selected from a polymer of an unsaturated carboxylic acid, a formalin condensate of a styrenesulfonate and an alkali metal phosphate, are incorporated (JP-A-61-236701), a method wherein a basic water-soluble ingredient, an anionic surfactant and an oily absorptive carrier are incorporated (JP-A-2001-151604), as a method wherein a specific carrier is incorporated, a method wherein an anionic surfactant and bentonite are incorporated (JP-A-62-263101), a method wherein a surfactant and a kaolin type clay of from 2 to 10 $\mu$m are incorporated (JP-A-3-264502) or a method wherein diatomaceous earth are incorporated (JP-A-6-128102).

However, the disintegration dispersibility in water of such conventional granular wettable powders is substantially influenced particularly by the type and nature of the agricultural chemical active ingredient, and they have not necessarily showed adequate disintegratability or dispersibility in water.

It is an object of the present invention to improve the dispersibility and suspensibility in water of a granulated wettable powder without being influenced by the type or nature of the agricultural chemical active ingredient, and to increase the productivity.

## DISCLOSURE OF THE INVENTION

The present inventors have conducted a study to solve problems of the conventional granulated wettable powders and as a result, have found that a granulated wettable powder characterized by comprising, as essential ingredients, a solid agricultural chemical active ingredient which has malleability at room temperature and which show a caking property even in storage at a temperature not higher than the melting point, a basic white carbon and a porous ingredient, has good disintegration dispersibility in water without being influenced by the type or nature of the agricultural chemical active ingredient, and have accomplished the present invention.

The present invention is defined by the subject matter of the claims.

Namely, The present invention is characterized by having the following features.

(1) A granulated wettable powder characterized by comprising, as essential ingredients, a solid agricultural chemical active ingredient, which has malleability at room temperature and which shows a caking property even in storage at a temperature not higher than the melting point, a basic white carbon which is a non-crystalline silicon dioxide powder, of which a 1% aqueous suspension has a pH of from 8 to 14, and a porous substance, whereby the granulated wettable powder is obtainable by the process according to any if the features (7) to (11) below.

(2) The granulated wettable powder according to the above (1), wherein the porous substance is at least one member selected from the group consisting of diatomaceous earth, acid clay, fuller's earth, attapulgite, sepiolite, pottery stone and pumice.

(3) The granulated wettable powder according to the above (1) or (2), wherein the pH of a 1% suspension of the basic white carbon is from 8 to 14.

(4) The granulated wettable powder according to any one of the above (1) to (3), wherein the average particle diameter of the solid agricultural chemical active ingredient is from 1 to 15 $\mu$m.

(5) The granulated wettable powder according to any one of the above (1) to (4), characterized by containing an anionic surfactant.

(6) The granulated wettable powder according to the above (5), wherein the anionic surfactant is at least one member selected from the group consisting of an alkyl sulfate, an alkylnaphthalene sulfonate, a formalin condensate of an alkylnaphthalene sulfonate, and a lignin sulfonate.

(7) A process for producing a granulated wettable powder, characterized by mixing a solid agricultural chemical active ingredient which has malleability at room temperature and which shows a caking property even in storage at a temperature not higher than the melting point, a basic white carbon which is a non-crystalline silicon dioxide powder, of which a 1% aqueous suspension has a pH of from 8 to 14, and a particulate porous substance, finely pulverizing the obtained mixture together so that the average particle diameter of the solid agricultural chemical active ingredient becomes from 1 to 15 $\mu$m, and then granulating the obtained mixed fine powders as essential ingredients.

(8) The process for producing a granulated wettable powder according to the above (7), wherein the particle volume 90% diameter in an aqueous suspension of the mixed fine powders obtained by the fine pulverization is at most 30 $\mu$m.

(9) The process for producing a granulated wettable powder according to the above (7) or (8), wherein the particle diameter of the particulate porous substance is from 0.1 to 5 mm.

(10) The process for producing a granulated wettable powder according to any one of the above (7) to (9), wherein the particulate porous substance is at least one member selected from the group consisting of diatomaceous earth, acid clay, fuller's earth, attapulgite, sepiolite, pottery stone and pumice.

(11) The process for producing a granulated wettable powder according to any one of the above (7) to (10), characterized in that the granulation is carried out by extrusion granulation.

## BEST MODE FOR CARRYING OUT THE INVENTION

Now, the present invention will be described in detail.

Malleability, which the solid agricultural chemical active ingredient of the present invention shows, means a nature such that when the particles of the solid agricultural chemical active ingredient of a few mm are pressed by a metal spatula, they may not only be crushed but spread over the pressed surface and further fix to the pressed surface. The solid agricultural chemical active ingredient to be used in the present invention may be any one of the compounds which are generally useful as agricultural chemicals such as insecticides, fungicides, or plant growth regulators, so long as it is a solid agricultural chemical active ingredient which has malleability at room temperature and which shows a caking property even in storage at a temperature not higher than the melting point. For example, it may be an insecticide such as spinosad, DMTP, tebufenpyrad, pyridaphenthion, dimethylvinphos or fenothiocarb, a fungicide such as ipconazole, benthiavalicarb isopropyl (isopropyl[(S)-1-[(R)-1-(6-fluorobenzothiazol-2-yl)ethylcarbamoyl]-2-methylpropyl]carbamate), mepronil, pencycuron, phthalide, cymoxanil, folpet or mepanipyrim, or a herbicide such as simetryn, cyhalofop-butyl, fentrazamide, atrazine, fluthacet-methyl, dithiopyr or pyriminobac-methyl.

The malleability is substantially influenced by the purity or crystal form of the agricultural chemical active ingredient, and accordingly, a due care is required for the judgment as to the presence or absence of the malleability. In the present invention, such agricultural chemical active ingredients which have malleability at room temperature and which show a caking property even in storage at a temperature not higher than the melting point, may be used alone or in combination as a mixture of two or more of them. Further, such an agricultural chemical active ingredient which has malleability at room temperature and which shows a caking property even in storage at a temperature not higher than the melting point, may be used as mixed with another solid agricultural chemical active ingredient showing no malleability at room temperature or with an agricultural chemical active ingredient which is liquid at room temperature. The solid agricultural chemical active ingredient showing no malleability at room temperature or the agricultural chemical active ingredient which is liquid at room temperature, to be mixed, may be any one of compounds which are generally useful as agricultural chemicals such as insecticides, fungicides, herbicides or plant growth regulators.

The concentration of such an agricultural chemical active ingredient in the granulated wettable powder is not particularly limited. However, from the viewpoint of the granulation property or bioactivity, it is usually preferably at most 85 mass%, particularly preferably from about 5 to 70 mass%.

In the present invention, the mixed fine powder of the pulverized products consisting of a solid agricultural chemical active ingredient which has malleability at room temperature and which shows a caking property even in storage at a temperature not higher than the melting point, a basic white carbon and a particulate porous substance, can be obtained by subjecting the mixture obtainable by mixing the solid agricultural chemical active ingredient, the basic white carbon and the particulate porous substance to impact pulverization by means of e.g. a pin mill or a hammer mill or to dry pulverization such as pulverization in a high speed stream by means of e.g. an air mill. By the pulverization thereof, the solid agricultural chemical active ingredient is preferably made to have an average particle diameter of from 1 to 15 $\mu$m, particularly, more preferably of from 1 to 10 $\mu$m. The average particle diameter of the above solid agricultural chemical active ingredient is a median diameter measured by a precipitation method, and the diameter can be measured by the method disclosed at pages 55 to 56 in Noyaku Seizaigaku, first edition, published on January 20, 1965, edited by Terumaro Suzuki.

Further, the pulverization of the above mixture is usually carried out to make the mixture of the pulverized products consisting of the solid agricultural chemical active ingredient, the basic white carbon and the particulate porous substance to have a particle volume 90% diameter preferably of at most 30 $\mu$m in an aqueous suspension. Particularly, the particle volume 90% diameter in the aqueous suspension is preferably at most 20 $\mu$m, more preferably at most 15 $\mu$m. The particle volume 90% diameter in the aqueous suspension shows the particle diameter corresponding to 90% from the bottom position in the integrating particle diameter distribution measured based on the volume. It can easily be measured by a laser diffraction scattering particle size distribution measuring apparatus, and in the aqueous suspension, the volume diameter of non-water soluble particles other than a surfactant, a water-soluble carrier, etc. can be obtained.

At the time of the pulverization of an agricultural chemical active ingredient which shows malleability at room temperature, it is frequently observed that the pulverization property deteriorates due to sticking of the pulverized product to the interior of the pulverizer during the pulverization, whereby the above-mentioned particle diameter range (the median diameter of an agricultural chemical active ingredient measured by a precipitation method: from 1 to 15 $\mu$m) can not be reached, or the interior of the pulverizer is filled with the stuck deposit, whereby pulverization itself becomes impossible, whereby the productivity is remarkably impaired. In such a case, sticking of the pulverized products is decreased drastically, and the pulverization property can be improved, by finely pulverizing it together with a basic white carbon and a particulate porous substance.

Particulate pumice is particularly preferred as the particulate porous substance. When a basic white carbon and particulate pumice are used, not only the pulverizing property and the productivity are improved by prevention of sticking of the pulverized product to the interior of the pulverizer during the pulverization, but also re-agglomeration of fine particles of the solid agricultural chemical active ingredient pulverized to suitable particle sizes during the production or storage, can be prevented to improve the disintegration dispersibility in water of the granulated wettable powder. Further, the effect for preventing caking of the granulated wettable powder during the storage can also be obtained.

In the present invention, the basic white carbon is a non-crystalline silicon dioxide powder, of which a 1 % aqueous suspension usually has a pH of from 8 to 14, preferably a pH of from 9 to 13, more preferably a pH of from 10 to 12. As the basic white carbon which can be used in the present invention, specifically, CARPLEX #100 or CARPLEX #1120, tradename of Shionogi & Co., Ltd., TOKUSEAL AL-1, tradename, of TOKUYAMA Corp., NIPSIL NA or NIPSIL G300, tradename of Nippon Silica Industrial Co., Ltd., or DUROSIL or EXTRUSIL, tradename of Degussa AG, may, for example, be mentioned.

In the present invention, the content of the basic white carbon in the granulated wettable powder is usually preferably from 0.1 to 50 mass%, but it may be optionally changed depending upon the concentration of the active ingredient in the formulation and is particularly preferably from about 1 to 20 mass%.

In the present invention, the particulate porous substance is one having pores with pore sizes of from about several nm to 1mm (usually from 100nm to 1mm) in the inside. A mineral such as zeolite, diatomaceous earth, acid clay, fuller's earth, bentonite, sepiolite, attapulgite, vermiculite, pumice, shiras, or pottery stone; an inorganic substance such as silica, alumina, brick, porous glass, synthetic zeolite or concrete; and an organic substance such as charcoal, coal, wood or a synthetic polymer, may, for example, be mentioned. Particularly, a mineral such as particulate diatomaceous earth, particulate acid clay, particulate fuller's earth, particulate attapulgite, particulate sepiolite, particulate pottery stone or particulate pumice, is preferred. Among them, an amorphous material is preferred, which is readily pulverizable and presents a highly safe pulverized product free from a possible danger such as pneumoconiosis. As such an amorphous material, particulate pumice or porous glass may, for example, be mentioned. The particle diameter of such particulates is not particularly limited, but it is usually from 0.1 to 5 mm, and preferably from 0.1 to 3 mm, more preferably from 0.1 to 2 mm.

In the present invention, the content of the porous substance in granulated wettable powder, is usually preferably 0.1 to 30 mass%, but it may optionally be changed depending on the concentration of the active ingredient in the formulation, and it is preferably from 0.2 to 15 mass%, more preferably from 0.5 to 5 mass%.

As the surfactant to be used in the present invention, any one of usual nonionic surfactants, anionic surfactants, cationic surfactants, etc. which are commonly used for granules or granulated wettable powders, may be employed. Such surfactants may be used alone or in combination as a mixture of three or more of them.

The nonionic surfactant may be any nonionic surfactant such as a polyoxyethylene alkyl ether, a polyoxyethylene alkyl phenyl ether, a polyoxyethylene polyoxypropylene ether, a polyoxyethylene alkyl ester, a polyoxyethylene sorbitan alkyl ester, a polyoxyethylene polyoxypropylene block copolymer, a sorbitan alkyl ester or a higher fatty acid alkanolamide. Such nonionic surfactants may be used alone or in combination as a mixture of two or more of them.

The cationic surfactant may be any one such as an alkylamine salt or a quaternary amine ammonium salt. Such cationic surfactants may be used alone or in combination as a mixture of two or more of them.

The anionic surfactant may, for example, be a naphthalenesulfonic acid polycondensate salt, an alkenyl sulfonate, a naphthalene sulfonate, a formalin condensate of a naphthalene sulfonate, an alkylnaphthalene sulfonate, a formalin condensate of an alkylnaphthalene sulfonate, a lignin sulfonate, an alkylaryl sulfonate, an alkylaryl sulfonate sulfate, a polystyrene sulfonate, a polycarboxylates, a polyoxyethylene alkyl ether sulfuric acid ester salt, a polyoxyethylene alkyl aryl ether sulfuric acid ester salt, an alkyl sulfosuccinate, an alkyl sulfate, an alkyl ether sulfonate, or a higher fatty acid alkali metal salt. Such anionic surfactants may be used alone or in combination as a mixture of two or more of them.

As the surfactant to be used in the present invention, an anionic surfactant is preferred. It is particularly preferred to employ at least one member selected from an alkyl sulfate, an alkylnaphthalene sulfonate, a formalin condensate of an alkylnaphthalene sulfonate, and a lignin sulfonate.

In the wettable powder of the present invention, a powder carrier for formulation, such as a powder mineral carrier, a water-soluble powder carrier or a vegetable powder carrier, is usually contained. As the mineral powder carrier, diatomaceous earth, talc, clay, calcium carbonate, bentonite, acid clay, attapulgite, zeolite, sericite, sepiolite or calcium silicate may, for example, mentioned. As the water-soluble powder carrier, ammonium sulfate, urea, dextrin, lactose, fructose, sucrose, glucose, sodium chloride, milabilite, sodium carbonate, sodium bicarbonate, maleic acid, citric acid, fumaric acid, malic acid or a polyethylene glycol having an average molecular weight of from 6000 to 20000, may, for example, be mentioned. As the vegetable powder carrier, wheat flour, wood powder, starch, bran, soybean powder or a fibrous crop plant pulverized product may, for example, be mentioned.

The content of the powder carrier for formulation in the wettable powder of the present invention is usually from 0.1 to 90 mass%, preferably from 0.5 to 75 mass%. The wettable powder of the present invention may contain other adjuvants such as a water-soluble polymer, a solvent, an absorptive fine powder, a binder, a pulverization assistant, a decomposition-preventing agent, a colorant, a defoaming agent, an effect-enhancing agent, a perfume, a builder, etc., as the case requires.

The wettable powder in the present invention is obtained by blending the materials as described above, but it is usually prepared by selecting the materials so that the particle volume 90% diameter in an aqueous suspension of the present invention is at most 30 $\mu$m. The particle volume 90% diameter of the wettable powder in an aqueous suspension is preferably at most 20 $\mu$m, more preferably at most 15 $\mu$m.

The wettable powder of the present invention can preferably be prepared by the following process, but the production process is not limited thereto. A mixture of the pulverized products consisting of the solid agricultural chemical active ingredient, which has malleability at room temperature and which shows a caking property even in storage at a temperature not higher than the melting point, a basic white carbon and a porous substance, or a mixture thereof having a suitable surfactant added, is pulverized by a dry system pulverizer such as a jet-o-miser or a hammer mill, so that the median diameter of the solid agricultural chemical active ingredient in a precipitation method will be from 1 to 15 $\mu$m. Then, other ingredients such as a carrier, adjuvants, etc. are added to the mixed fine powders, followed by mixing, (adding water if the case requires), kneading, then granulation by means of a granulator and drying, to obtain it. Also in the wettable powder of the present invention, the fine particles of the solid agricultural chemical active ingredient are prepared so that the median diameter in a precipitation method will be from 1 to 15 $\mu$m. The granulation can be carried out by e.g. an extrusion granulator (extrusion granulation), a pressure granulator (pressure granulation), a fluidized bed granulator (fluidized bed granulation), an agitation granulator (agitation granulation) or a tumbling granulator (tumbling granulation).

The wettable powder of the present invention thus obtained, has merits such that (1) it is excellent in the disintegration dispersibility in water irrespective of the nature of the agricultural chemical active ingredient, (2) it is excellent in suspensibility irrespective of the nature of the agricultural chemical active ingredient, (3) caking during the storage can be prevented, and (4) it prevents loss due to sticking of the solid agricultural chemical active ingredient to the interior of the pulverizer during the pulverization step, and shows an excellent pulverizability whereby it can readily be pulverized to the prescribed particle diameter. It is thus widely employed as an agricultural chemical such as a fungicide, an insecticide, a herbicide or a plant-growth-regulating agent.

EXAMPLES

Now, the present invention will be described in further detail with reference to Examples, Comparative Examples and Test Examples, but it should be understood that the present invention is by no means restricted thereto. Here, "parts" is all based on mass parts. Among solid agricultural chemical active ingredients used in the following Examples and Comparative Examples, mepronil, fenothiocarb, benthiavalicarb isopropyl, and folpet, showed malleability at room temperature and a caking property even in storage at a temperature not higher than the respective melting points. The particle volume 90% diameters, of which measuring methods are not specified, are values measured by a laser diffraction scattering particle size distribution measuring apparatus.

EXAMPLE 1

90 Parts of mepronil, 7 parts of a basic white carbon (CARPLEX #1120, tradename of Shionogi & Co., Ltd., pH of 1% suspension: 11.5) and 3 parts of particulate pumice (ISHIKAWALITE No.3, tradename of Ishikawalite Industrial Co. Ltd., particle diameter: from 0.2 mm to 1 mm) were uniformly mixed, followed by fine pulverization by a jet-o-miser to obtain a premix of mepronil. The median diameter of mepronil in the premix of mepronil was measured by a precipitation method and found to be 5.2 $\mu$m. Further, the particle volume 90% diameter of the premix of mepronil in the aqueous suspension was measured by a laser diffraction scattering particle size distribution measuring apparatus (LMS-24 type, tradename of Seishin Enterprise Co., LTD., the same applies hereinafter in each Example) and found to be 10.9 $\mu$m.

55.6 Parts of the above premix of mepronil, 1 part of sodium alkyl sulfate, 9 parts of a formalin condensate of sodium alkylnaphthalene sulfonate, and 34.4 parts of calcium carbonate powder, were mixed by means of a mixer. Then, about 10 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of mepronil was measured by a precipitation method and found to be 5.1 $\mu$m. Further, the particle volume 90% diameter in the aqueous suspension of the granulated wettable powder was measured by a laser diffraction scattering particle size distribution measuring apparatus (LMS-24 type, tradename of Seishin Enterprise Co., LTD., the same applies hereinafter in each Example) and found to be 12.1 $\mu$m.

EXAMPLE 2

60 Parts of fenothiocarb, 35 parts of a basic white carbon (CARPLEX #1120, tradename of Shionogi & Co., Ltd., pH of 1% suspension: 11.5) and 5 parts of particulate acid clay (GALLEONITE #0124, tradename of Mizusawa Industrial Chemicals, Ltd., particle diameter: from 0.2mm to 1mm) were uniformly mixed, followed by fine pulverization by a jet-o-miser to obtain a premix of fenothiocarb. The median diameter of fenothiocarb in the premix of fenothiocarb was measured by a precipitation method and found to be 6.6 $\mu$m. Further, the particle volume 90% diameter in the aqueous suspension of the premix of fenothiocarb was measured by a laser diffraction scattering particle size distribution measuring apparatus, and found to be 11.6 $\mu$m.

50 Parts of the above premix of fenothiocarb, 2 parts of sodium alkyl sulfate, 8 parts of sodium lignin sulfonate and 40 parts of clay were mixed by means of a mixer. Then, about 10 parts of water was added, followed by kneading and granulation by means of an extrusion granulator equipped with a screen having an opening size of 0.6 mm. After drying at 40°C, the particle size was adjusted by a sieve of from 16 to 48 mesh to obtain a granulated wettable powder. The median diameter of fenothiocarb in the obtained granulated wettable powder was measured by a precipitation method and found to be 6.8 μm. Further, the particle volume 90% diameter in the aqueous suspension of the granulated wettable powder was measured by a laser diffraction scattering particle size distribution measuring apparatus and found to be 11.2 μm.

EXAMPLE 3

75 Parts of benthiavalicarb isopropyl, 20 parts of a basic white carbon (CARPLEX #1120, tradename of Shionogi & Co., Ltd., pH of 1% suspension: 11.5) and 5 parts of particulate pumice (KAGALITE No.2, tradename of Ishikawalite industrial Co. Ltd., particle diameter: from 0.2mm to 1.8 mm) were uniformly mixed, followed by fine pulverization by a jet-o-miser to obtain a premix of benthiavalicarb isopropyl. The median diameter of benthiavalicarb isopropyl in the premix of benthiavalicarb isopropyl was measured by a precipitation method and found to be 6.3 μm. Further, the particle volume 90% diameter in the aqueous suspension of the premix of benthiavalicarb isopropyl was measured by a laser diffraction scattering particle size distribution measuring apparatus and found to be 12.2 μm.

20 Parts of the above premix of benthiavalicarb isopropyl, 2 parts of sodium alkyl sulfate, 8 parts of a formalin condensate of sodium alkylnaphthalene sulfonate, 30 parts of diatomaceous earth powder and 40 parts of clay were mixed by means of a mixer. Then, about 15 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of the premix of benthiavalicarb isopropyl in the obtained granulated wettable powder was measured by a precipitation method and found to be 6.2 μm. Further, the particle volume 90% diameter in the aqueous suspension of the granulated wettable powder was measured by a laser diffraction scattering particle size distribution measuring apparatus and found to be 13.8 μm.

EXAMPLE 4

90 Parts of mepronil, 7 parts of a basic white carbon (NIPSIL NA, tradename of Nippon Silica Industrial Co., Ltd., pH of 1% suspension: 10.2) and 3 parts of particulate diatomaceous earth (ISOLITE CG, tradename of Isolite Insulating Products Co., Ltd., particle diameter: from 1 mm to 3 mm) were uniformly mixed, followed by fine pulverization by a jet-o-miser to obtain a premix of mepronil. The median diameter of mepronil in the premix of mepronil was measured by a precipitation method and found to be 8.0 μm. Further, the particle volume 90% diameter in the aqueous suspension of the premix of mepronil was measured by a laser diffraction scattering particle size distribution measuring apparatus and found to be 14.5 μm.

55.6 Parts of the above premix of mepronil, 1 part of sodium alkyl sulfate, 9 parts of a formalin condensate of sodium alkylnaphthalene sulfonate, 20 parts of powder urea and 14.4 parts of clay, were mixed by means of a mixer. Then, about 15 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of mepronil in the obtained granulated wettable powder was measured by a precipitation method and found to be 7.9 μm. The particle volume 90% diameter in the aqueous suspension of the granulated wettable powder was measured by a laser diffraction scattering particle size distribution measuring apparatus and found to be 13.1 μm.

EXAMPLE 5

75 Parts of benthiavalicarb isopropyl, 20 parts of a basic white carbon (EXTRUSIL, tradename of Degussa Co., Ltd., pH of 1% suspension: 10.2) and 5 parts of particulate attapulgite (AGSORB24/48LVM-GA, tradename of Oil Dri Corp., particle diameter: from 0.2 mm to 1 mm) were uniformly mixed, followed by fine pulverization by a jet-o-miser to obtain a premix of benthiavalicarb isopropyl. The median diameter of benthiavalicarb isopropyl in the premix of benthiavalicarb isopropyl was measured by a precipitation method and found to be 7.0 μm. Further, the particle volume 90% diameter in the aqueous suspension of the premix of benthiavalicarb isopropyl was measured by a laser diffraction scattering particle size distribution measuring apparatus and found to be 13.6 μm.

40 Parts of the above premix of benthiavalicarb isopropyl, 3 parts of sodium alkyl sulfate, 5 parts of sodium lignin sulfonate, 8 parts of a formalin condensate of sodium alkylnaphthalene sulfonate, 15 parts of lactose and 29 parts of clay, were mixed by means of a mixer. Then, about 10 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of mepronil in the obtained granulated wettable powder was measured by a precipitation method and found to be 7.0 $\mu$m. Further, the particle volume 90% diameter in the aqueous suspension of the granulated wettable powder was measured by a laser diffraction scattering particle size distribution measuring apparatus and found to be 12.5 $\mu$m.

EXAMPLE 6

3.5 Parts of benthiavalicarb isopropyl, 90 parts of folpet, 3 parts of a basic white carbon (CARPLEX #1120, tradename of Shionogi & Co., Ltd., pH of 1% suspension: 11.5) and 3.5 parts of particulate pumice (ISHIKAWALITE No.3, tradename of Ishikawalite Industrial Co. Ltd., particle diameter: from 0.2mm to 1 mm) were uniformly mixed, followed by fine pulverization by a jet-o-miser to obtain a premix. The median diameters of benthiavalicarb isopropyl and folpet in the premix were measured by a precipitation method and found to be 7.1 $\mu$m and 4.0 $\mu$m, respectively. Further, the particle volume 90% diameter in the aqueous suspension of the premix was measured by a laser diffraction scattering particle size distribution measuring apparatus and found to be 9.7 $\mu$m.
50 Parts of the above premix, 2 parts of sodium alkylnaphthalene sulfonate, 8 parts of a formalin condensate of sodium alkylnaphthalene sulfonate and 40 parts of clay, were mixed by means of a mixer. Then, about 10 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameters of benthiavalicarb isopropyl and folpet in the obtained granulated wettable powder were measured by a precipitation method and found to be 7.2 $\mu$m and 3.9 $\mu$m, respectively. Further, the particle volume 90% diameter in the aqueous suspension of the granulated wettable powder was measured by a laser diffraction scattering particle size distribution measuring apparatus and found to be 10.1 $\mu$m.

EXAMPLE 7

10 Parts of benthiavalicarb isopropyl, 80 parts of TPN, 7 parts of a basic white carbon (CARPLEX #1120, tradename of Shionogi & Co., Ltd., pH of 1% suspension: 11.5) and 3 parts of particulate pumice (ISHIKAWALITE No.3, tradename of Ishikawalite Industrial Co. Ltd., particle diameter: from 0.2mm to 1 mm) were uniformly mixed, followed by fine pulverization by a jet-o-miser to obtain a premix. The median diameters of benthiavalicarb isopropyl and TPN in the premix were measured by a precipitation method and found to be 7.2 $\mu$m and 5.4 $\mu$m, respectively. Further, the particle volume 90% diameter in the aqueous suspension of the premix was measured by a laser diffraction scattering particle size distribution measuring apparatus and found to be 10.9 $\mu$m.
50 Parts of the above premix, 2 parts of sodium alkylnaphthalene sulfonate, 8 parts of a formalin condensate of sodium alkylnaphthalene sulfonate and 40 parts of clay, were mixed by means of a mixer. Then, about 10 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameters of benthiavalicarb isopropyl and TPN in the obtained granulated wettable powder were measured by a precipitation method and found to be 7.2 $\mu$m and 5.4 $\mu$m, respectively. Further, the particle volume 90% diameter in the aqueous suspension of the granulated wettable powder was measured by a laser diffraction scattering particle size distribution measuring apparatus and found to be 11.5 $\mu$m.

COMPARATIVE EXAMPLE 1

Mepronil was finely pulverized by a jet-o-miser. The median diameter of mepronil was measured by a precipitation method and found to be 16.2 $\mu$m. Further, the particle volume 90% diameter in the aqueous suspension of the pulverized product was measured by a laser diffraction scattering particle size distribution measuring apparatus and found to be 31.3 $\mu$m. 50 parts of the above pulverized product of mepronil, 1 part of sodium alkyl sulfonate, 9 parts of a formalin condensate of sodium alkylnaphthalene sulfonate and 40 parts of calcium carbonate powder, were mixed by means of a mixer, and then, about 10 parts of water was added, followed by kneading and granulation by means of an extrusion granulator equipped with a screen having an opening size of 0.6 mm. After drying at 60°C, the particle size was adjusted by a sieve of from 16 to 48 mesh, to obtain a granulated wettable powder. The median diameter of mepronil in the obtained granulated wettable powder was measured by a precipitation method and found to be 15.9 $\mu$m. Further, the particle volume 90% diameter in the aqueous suspension of the pulverized product was measured by a laser diffraction scattering particle size distribution measuring apparatus and found to be 22.3 $\mu$m.

COMPARATIVE EXAMPLE 2

90 Parts of mepronil and 10 parts of a basic white carbon (CARPLEX #1120, tradename of Shionogi & Co., Ltd., pH of 1% suspension: 11.5) were uniformly mixed, followed by fine pulverization by a jet-o-miser to obtain a premix of mepronil. The median diameter of mepronil in the premix of mepronil was measured by a precipitation method and found to be 9.5 $\mu$m. Further, the particle volume 90% diameter in the aqueous suspension of the premix of mepronil was measured by a laser diffraction scattering particle size distribution measuring apparatus and found to be 20.8 $\mu$m.
55.6 Parts of the above premix of mepronil, 1 part of sodium alkyl sulfate, 9 parts of a formalin condensate of sodium alkylnaphthalene sulfonate and 34.4 parts of calcium carbonate powder, were mixed by means of a mixer. Then, about 10 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of mepronil in the obtained granulated wettable powder was measured by a precipitation method and found to be 9.5 $\mu$m. Further, the particle volume 90% diameter in the aqueous suspension of the granulated wettable powder was measured by a laser diffraction scattering particle size distribution measuring apparatus and found to be 16.4 $\mu$m.

COMPARATIVE EXAMPLE 3

Fenothiocarb was finely pulverized by a jet-o-miser to obtain the pulverized product of fenothiocarb. The median diameter of fenothiocarb was measured by a precipitation method and found to be 16.1 $\mu$m. Further, the particle volume 90% diameter in the aqueous suspension of the pulverized product was measured by a laser diffraction scattering particle size distribution measuring apparatus and found to be 30.2 $\mu$m.
30 parts of the above pulverized product of fenothiocarb, 2 parts of sodium alkyl sulfate, 8 parts of sodium lignin sulfonate and 60 parts of clay were mixed by means of a mixer, and then, about 10 parts of water was added, followed by kneading and granulation by means of an extrusion granulator equipped with a screen having an opening size of 0.6 mm. After drying at 40°C, the particle size was adjusted by a sieve of from 16 to 48 mesh, to obtain a granulated wettable powder. The median diameter of fenothiocarb in the obtained granulated wettable powder was measured by a precipitation method and found to be 16.3 $\mu$m. Further, the particle volume 90% diameter in the aqueous suspension of the pulverized product was measured by a laser diffraction scattering particle size distribution measuring apparatus and found to be 19.7 $\mu$m.

COMPARATIVE EXAMPLE 4

Benthiavalicarb isopropyl was finely pulverized to obtain the pulverized product of benthiavalicarb isopropyl. The median diameter of benthiavalicarb isopropyl was measured by a precipitation method and found to be 15.1 $\mu$m. Further, the particle volume 90% diameter in the aqueous suspension of the pulverized product of benthiavalicarb isopropyl was measured by a laser diffraction scattering particle size distribution measuring apparatus and found to be 30.8 $\mu$m.
15 parts of the above pulverized product of benthiavalicarb isopropyl, 2 parts of sodium alkyl sulfate, 8 parts of a formalin condensate of sodium alkylnaphthalene sulfonate, 30 parts of diatomaceous earth powder and 45 parts of clay, were mixed by means of a mixer, and then, about 15 parts of water was added, followed by kneading and granulation by means of an extrusion granulator equipped with a screen having an opening size of 0.6 mm. After drying at 60°C, the particle size was adjusted by a sieve of from 16 to 48 mesh, to obtain a granulated wettable powder. The median diameter of benthiavalicarb isopropyl in the obtained granulated wettable powder was measured by a precipitation method and found to be 15.5 $\mu$m. Further, the particle volume 90% diameter in the aqueous suspension of the pulverized product was measured by a laser diffraction scattering particle size distribution measuring apparatus and found to be 20.4 $\mu$m.

COMPARATIVE EXAMPLE 5

75 Parts of benthiavalicarb isopropyl and 25 parts of a basic white carbon (CARPLEX #1120, tradename of Shionogi & Co., Ltd., pH of 1% suspension: 11.5) were uniformly mixed, followed by fine pulverization by a jet-o-miser to obtain a premix of benthiavalicarb isopropyl. The median diameter of benthiavalicarb isopropyl in the premix of benthiavalicarb isopropyl was measured by a precipitation method and found to be 11.7 $\mu$m. Further, the particle volume 90% diameter in the aqueous suspension of the premix of mepronil was measured by a laser diffraction scattering particle size distribution measuring apparatus and found to be 20.3 $\mu$m.
20 Parts of the above premix of benthiavalicarb isopropyl, 2 parts of sodium alkyl sulfate, 8 parts of a formalin condensate of sodium alkylnaphthalene sulfonate and 30 parts of diatomaceous earth powder and 40 parts of clay, were mixed by means of a mixer. Then, about 15 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter ofbenthiavalicarb isopropyl in the obtained granulated wettable powder was measured by a precipitation method and found to be 11.5 μm. Further, the particle volume 90% diameter in the aqueous suspension of the granulated wettable powder was measured by a laser diffraction scattering particle size distribution measuring apparatus and found to be 15.5 μm.

COMPARATIVE EXAMPLE 6

75 parts of benthiavalicarb isopropyl and 25 parts of particulate pumice (ISHIKAWALITE No.3, tradename of Ishikawalite Industrial Co. Ltd., particle diameter: from 0.2mm to 1 mm) were uniformly mixed, followed by fine pulverization by a jet-o-miser to obtain a premix. The median diameter of benthiavalicarb isopropyl in the premix of benthiavalicarb isopropyl was measured by a precipitation method and found to be 4.9 μm. Further, the particle volume 90% diameter in the aqueous suspension of this premix was measured by a laser diffraction scattering particle size distribution measuring apparatus and found to be 11.1 μm.

20 Parts of the above premix of benthiavalicarb isopropyl, 2 parts of sodium alkyl sulfate, 8 parts of a formalin condensate of sodium alkylnaphthalene sulfonate and 30 parts of diatomaceous earth powder and 40 parts of clay, were mixed by means of a mixer, and then, about 15 parts of water was added thereto, followed by kneading and granulation by means of an extrusion granulator equipped with a screen having an opening size of 0.6 mm. After drying at 60°C, the particle size was adjusted by a sieve of from 16 to 48 mesh to obtain a granulated wettable powder. The median diameter of benthiavalicarb isopropyl in the obtained granulated wettable powder was measured by a precipitation method and found to be 5.0 μm. Further, the particle volume 90% diameter in the aqueous suspension of the granulated wettable powder was measured by a laser diffraction scattering particle size distribution measuring apparatus and found to be 10.3 μm.

TEST EXAMPLE 1

About 50 g of the formulation obtained in each of Examples and Comparative Examples was put in an aluminum laminated bag, sealed by heat sealing and stored at 54°C for 14 days. With respect to the samples immediately after the production and after the above storage, the disintegration dispersibility in water, the suspension rate and the fineness were measured by the following methods. In a constant temperature water tank of 25°C, a 250 ml cylinder containing 250 ml of 3 degree hard water and equipped with a stopper, was set. 250 mg of each granulated wettable powder was put into the cylinder, and the cylinder was repeatedly inverted at a rate of once every 2 seconds, and the number of times of inversion of the cylinder until the granulated wettable powder was completely disintegrated and dispersed, was shown as the disintegration dispersibility in water.

Then, this cylinder was left to stand still in the constant temperature water tank of 25°C, and upon expiration of 15 minutes, 25 ml was sampled from the center of the cylinder, and the agricultural chemical active ingredient was analyzed by high speed liquid chromatography to obtain the suspension rate. Further, 10 g of each granulated wettable powder was put into a 200 ml beaker, and 100 ml of tap water was added thereto, followed by stirring for 5 minutes. The obtained suspension was put into a sieve of 300 mesh, and sufficiently washed with tap water, whereupon the residue was recovered and dried. From the weight of this residue, the proportion passed through the sieve was calculated and shown as the fineness.

The suspension rate is obtained by the following formula.

$$\text{Suspension rate}(\%) = [(B \times 10)/A] \times 100$$

A: The amount of the active ingredient in the initial sample
B: The amount of the active ingredient in the sampled test solution

The number of times of inversion of the cylinder until the granulated wettable powder was completely disintegrated and dispersed, was shown as the disintegration dispersibility in water.

Table 1

| Tested formulation | Disintegration dispersibility in water (times) | | Suspension rate (%) | | Fineness (%) | |
|---|---|---|---|---|---|---|
| | Immediately after the production | 54°C × 14 days | Immediately after the production | 54°C × 14 days | Immediately after the production | 54°C × 14 days |
| Ex. 1 | 4 | 4 | 98.0 | 97.4 | 99.8 | 99.8 |
| Ex. 2 | 6 | 6 | 93.5 | 92.8 | 99.6 | 99.0 |
| Ex. 3 | 2 | 2 | 99.8 | 99.5 | 99.8 | 99.0 |
| Ex. 4 | 3 | 3 | 98.3 | 98.5 | 99.8 | 99.2 |
| Ex. 5 | 2 | 2 | 99.5 | 99.0 | 99.9 | 99.4 |
| Ex. 6 | 4 | 4 | 98.0 | 97.6 | 99.5 | 99.0 |
| Ex. 7 | 4 | 4 | 99.6 | 98.8 | 99.7 | 99.1 |
| Comp. Ex. 1 | 10 | 10 | 87.1 | 73.5 | 95.2 | 87.3 |
| Comp. Ex. 3 | 12 | 14 | 89.5 | 62.8 | 90.5 | 85.4 |
| Comp. Ex. 4 | 13 | 13 | 75.8 | 70.3 | 91.2 | 89.3 |

TEST EXAMPLE 2

Into a glass beaker having an inner diameter of 6 cm, 20 g of the formulation obtained in each of Examples and Comparative Examples was put, and a weight was placed on the flattened sample so that the pressure would be 25 g/cm$^2$. The sample was left to stand at room temperature for 1 month, whereupon the weight was removed, and the caking state of the formulation was visually inspected. The obtained results are shown in Table 2.

Table 2

| Tested formulation | Caking degree |
|---|---|
| Ex. 1 | No caking |
| Ex. 2 | No caking |
| Ex. 3 | No caking |
| Ex. 4 | No caking |
| Ex. 5 | No caking |
| Ex. 6 | No caking |
| Ex. 7 | No caking |
| Comp. Ex. 1 | The sample was partially caked |
| Comp. Ex. 3 | The entire sample was caked |
| Comp. Ex. 4 | The entire sample was caked |
| Comp. Ex. 6 | The entire sample was caked |

TEST EXAMPLE 3

The deposition of the pulverized product to the inside of the pulverizer (jet-o-miser) was visually inspected when the premixes in Examples and Comparative Examples were produced. The obtained results are shown in Table 3.

Table 3

| Tested formulation | Degree of deposition pulverizer |
|---|---|
| Ex. 1 | No substantial deposit observed |
| Ex. 2 | A small amount of deposit partially observed |
| Ex. 3 | No substantial deposit observed |
| Ex. 4 | A small amount of deposit partially observed |
| Ex. 5 | A small amount of deposit partially observed |
| Ex. 6 | No substantial deposit observed |
| Ex. 7 | No substantial deposit observed |
| Comp. Ex. 1 | The sample was firmly deposited almost over the entire surface |
| Comp. Ex. 2 | Partially firmly deposited |
| Comp. Ex. 3 | The sample was firmly deposited almost over the entire surface |
| Comp. Ex. 4 | The sample was firmly deposited almost over the entire surface |
| Comp. Ex. 5 | Partially firmly deposited |

INDUSTRIAL APPLICABILITY

With the granulated wettable powder composition of the present invention, as compared with conventional ones, the dispersibility and suspensibility can be improved without being influenced by the type or nature of the agricultural chemical active ingredient.

**Claims**

1.   A process for producing a granulated wettable powder, **characterized by**

(i) mixing a solid agricultural chemical active ingredient which has malleability at room temperature and which shows a caking property even in storage at a temperature not higher than the melting point, a basic white carbon which is a non-crystalline silicon dioxide powder, of which a 1 % aqueous suspension has a pH of from 8 to 14, and a particulate porous substance,
(ii) finely pulverizing the obtained mixture together so that the average particle diameter of the solid agricultural chemical active ingredient becomes from 1 to 15 $\mu$m, and then
(iii) granulating the obtained mixed fine powders as essential ingredients.

2.   The process for producing a granulated wettable powder according to Claim 1, wherein the particle volume 90% diameter in an aqueous suspension of the mixed fine powders obtained by the fine pulverization is at most 30 $\mu$m.

3.   The process for producing a granulated wettable powder according to Claim 1 or Claim 2, wherein the particle diameter of the particulate porous substance is from 0.1 to 5 mm.

4.   The process for producing a granulated wettable powder according to any one of Claims 1 to 3, wherein the particulate porous substance is at least one member selected from the group consisting of diatomaceous earth, acid clay, fuller's earth, attapulgite, sepiolite, pottery stone and pumice.

5.   The process for producing a granulated wettable powder according to any one of Claims 1 to 4, **characterized in that** the granulation is carried out by extrusion granulation.

6.   A granulated wettable powder **characterized by** comprising, as essential ingredients, a solid agricultural chemical active ingredient, which has malleability at room temperature and which shows a caking property even in storage at a temperature not higher than the melting point, a basic white carbon which is a non-crystalline silicon dioxide powder, of which a 1 % aqueous suspension has a pH of from 8 to 14, and a porous substance, whereby the granulated wettable powder is obtainable by the process according to any one of claims 1 to 5.

7. The granulated wettable powder according to claim 6, **characterized by** containing an anionic surfactant.

8. The granulated wettable powder according to Claim 7, wherein the anionic surfactant is at least one member selected from the group consisting of an alkyl sulfate, an alkylnaphthalene sulfonate, a formalin condensate of an alkylnaphthalene sulfonate, and a lignin sulfonate.


**Patentansprüche**

1. Verfahren zum Herstellen eines granulierten, benetzbaren Pulvers, **gekennzeichnet durch**

(i) Mischen eines festen agrochemischen Wirkstoffs, der bei Raumtemperatur verformbar ist und welcher sogar bei Lagerung bei einer Temperatur nicht höher als dem Schmelzpunkt Verklumpungseigenschaften zeigt, eines basischen Weißrußes (basic white carbon), der ein nicht-kristallines Siliciumdioxid-Pulver ist, von dem eine 1 % wässrige Suspension einen pH von 8 bis 14 besitzt, und einer partikulären, porösen Substanz,
(ii) gemeinsames Feinpulverisieren der erhaltenen Mischung, so dass der durchschnittliche Partikeldurchmesser des festen agrochemischen Wirkstoffs von 1 bis 15 μm wird, und nachfolgend
(iii) Granulieren der erhaltenen gemischten, feinen Pulver als wesentliche Bestandteile.

2. Verfahren zum Herstellen eines granulierten, benetzbaren Pulvers nach Anspruch 1, wobei der Partikelvolumen-90 %-Durchmesser in einer wässrigen Suspension der gemischten, durch Feinpulverisieren erhaltenen feinen Pulver höchstens 30 μm beträgt.

3. Verfahren zum Herstellen eines granulierten, benetzbaren Pulvers nach Anspruch 1 oder Anspruch 2, wobei der Partikeldurchmesser der partikulären, porösen Substanz von 0,1 bis 5 mm beträgt.

4. Verfahren zum Herstellen eines granulierten, benetzbaren Pulvers nach einem der Ansprüche 1 bis 3, wobei die partikuläre, poröse Substanz mindestens ein aus der aus Diatomeenerde, saurem Ton, Bleicherde, Attapulgit, Sepiolith, Steinkeramik und Bimsstein gebildeten Gruppe ausgewähltes Mitglied ist.

5. Verfahren zum Herstellen eines granulierten, benetzbaren Pulvers nach einem der Ansprüche 1 bis 4, **dadurch gekennzeichnet, dass** das Granulieren mittels Extrusionsgranulieren durchgeführt wird.

6. Granuliertes, benetzbares Pulver, **dadurch gekennzeichnet, dass** es, als wesentliche Bestandteile, einen festen agrochemischen Wirkstoff umfasst, welcher bei Raumtemperatur verformbar ist und welcher sogar bei Lagerung bei einer Temperatur nicht höher als dem Schmelzpunkt Verklumpungseigenschaften zeigt, einen basischen Weißruß, der ein nicht-kristallines Siliciumdioxid-Pulver ist, von dem eine 1 % wässrige Suspension einen pH von 8 bis 14 besitzt, und eine partikuläre, poröse Substanz, wobei das granulierte, benetzbare Pulver durch ein Verfahren nach einem der Ansprüche 1 bis 5 erhältlich ist.

7. Granuliertes, benetzbares Pulver nach Anspruch 6, **dadurch gekennzeichnet, dass** es ein anionisches Tensid enthält.

8. Granuliertes, benetzbares Pulver nach Anspruch 7, wobei das anionische Tensid wenigstens ein aus der aus einem Alkylsulfat, einem Alkylnaphthalinsulfonat, einem Formalinkondensat eines Alkylnaphthalinsulfonats und einem Ligninsulfonat bestehenden Gruppe ausgewähltes Mitglied ist.


**Revendications**

1. Procédé pour produire une poudre mouillable granulée, **caractérisé par**

(i) le mélange d'un agent actif chimique solide à usage agricole qui présente une malléabilité à la température ambiante et une propriété d'agglomération même au stockage à une température non supérieure au point de fusion, d'un carbone blanc basique qui est une poudre de dioxyde de silicium non cristallin dont une suspension aqueuse à 1 % présente un pH de 8 à 14, et d'une substance poreuse particulaire,

(ii) la pulvérisation fine du mélange obtenu de sorte que la granulométrie moyenne de l'agent actif chimique à usage agricole solide devienne de 1 à 15 μm, et ensuite

(iii) la granulation des poudres fines mélangées obtenues à titre d'ingrédients essentiels.

2. Procédé pour produire une poudre mouillable granulée selon la revendication 1, dans lequel la granulométrie en volume à 90 % dans une suspension aqueuse des poudres fines mélangées obtenues par la pulvérisation fine est d'au plus 30 μm.

3. Procédé pour produire une poudre mouillable granulée selon la revendication 1 ou la revendication 2, dans lequel la granulométrie de la substance poreuse particulaire est de 0,1 à 5 mm.

4. Procédé pour produire une poudre mouillable granulée selon l'une quelconque des revendications 1 à 3, dans lequel la substance poreuse particulaire est au moins un membre choisi dans l'ensemble constitué par la terre de diatomées, l'argile acide, la terre à foulon, l'attapulgite, la sépiolite, la pierre à faïence et la pierre ponce.

5. Procédé pour produire une poudre mouillable granulée selon l'une quelconque des revendications 1 à 4, **caractérisé en ce que** la granulation est mise en oeuvre au moyen d'une granulation par extrusion.

6. Poudre mouillable granulée **caractérisée en ce qu'**elle comprend, à titre d'ingrédients essentiels, un agent actif chimique solide à usage agricole, qui présente une malléabilité à la température ambiante et une propriété d'agglomération même au stockage à une température non supérieure au point de fusion, un carbone blanc basique qui est une poudre de dioxyde de silicium non cristallin dont une suspension aqueuse à 1 % présente un pH de 8 à 14, et une substance poreuse, la poudre mouillable granulée pouvant être obtenue par le procédé de l'une quelconque des revendications 1 à 5.

7. Poudre mouillable granulée selon la revendication 6, **caractérisée en ce qu'**elle contient un tensioactif anionique.

8. Poudre mouillable granulée selon la revendication 7, dans laquelle le tensioactif anionique est au moins un membre choisi dans l'ensemble constitué par un alkylsulfate, un alkylnaphtalènesulfonate, un condensat de formaline et d'un alkylnaphtalènesulfonate, et un ligninesulfonate.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59193803 A
- JP 62036302 A
- JP 5043402 A
- JP 7126106 A
- JP 8034702 A
- JP 51001649 A
- JP 57163303 A
- JP 61236701 A
- JP 2001151604 A
- JP 62263101 A
- JP 3264502 A
- JP 6128102 A